(19)

Europäisches
Patentamt
European
Patent Office
Office européen
des brevets

(11) **EP 3 340 168 A1**

(12) **EUROPEAN PATENT APPLICATION**
published in accordance with Art. 153(4) EPC

(43) Date of publication:
**27.06.2018 Bulletin 2018/26**

(21) Application number: **16836606.0**

(22) Date of filing: **12.08.2016**

(51) Int Cl.:
***G06T 5/00*** *(2006.01)*

(86) International application number:
**PCT/CN2016/094817**

(87) International publication number:
**WO 2017/028742 (23.02.2017 Gazette 2017/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.08.2015 CN 201510505819**

(71) Applicant: **BYD Company Limited Shenzhen, Guangdong 518118 (CN)**

(72) Inventor: **MAO, Shuijiang Shenzhen Guangdong 518118 (CN)**

(74) Representative: **D'Halleweyn, Nele Veerle Trees Gertrudis et al Arnold & Siedsma Bezuidenhoutseweg 57 2594 AC The Hague (NL)**

(54) **IMAGE DENOISING SYSTEM AND IMAGE DENOISING METHOD**

(57) Embodiments of this application disclose an image denoising system and an image denoising method. In the image denoising system disclosed in the embodiments of this application, an image signal obtaining unit obtains and outputs an image signal. A processing unit performs preprocessing on the image signal to obtain image data, performs Sobel operator calculation on a current pixel in the image data to obtain a Sobel operator of the current pixel, corrects the Sobel operator of the current pixel, and determines, according to the corrected Sobel operator, whether denoising processing needs to be performed on the current pixel. If the denoising processing needs to be performed on the current pixel, the processing unit calculates an average pixel value of pixels around the current pixel, and performs denoising processing on the current pixel by using the average pixel value and the corrected Sobel operator. If the denoising processing does not need to be performed on the current pixel, the processing unit determines whether the denoising processing needs to be performed on a next pixel in the image data.

FIG. 1

**EP 3 340 168 A1**

**Description**

**CROSS-REFERENCE TO RELATED APPLICATIONS**

This application claims priority to Chinese Patent Application No. 201510505819.8 filed on August 17, 2015, which is incorporated herein by reference in its entirety.

**BACKGROUND**

**Technical Field**

This application relates to the field of image processing, and more specifically, to an image denoising system and an image denoising method.

**Related Art**

In recent years, image sensors rapidly develop, and when the sales volume continuously increases, increasingly high image quantity requirements are imposed at the same time. One of the most important indexes is the signal-to-noise ratio. Affected by hardware, environments, and human behaviors, an image inevitably includes various noise and interference signals, affecting details of the image to a great extent, and finally affecting the quality of the image. Correspondingly, various denoising methods emerge in succession, such as local adaptive denoising, variance-based denoising, wavelet transform denoising, median filtering denoising, and the like.

As described above, existing image denoising methods include the local adaptive denoising, the variance-based denoising, the wavelet transform denoising, the median filtering denoising, and the like. During denoising, it should be noted that, on one hand, noise is in a high-frequency area, and easy to be confused with image details, causing losses of details during the denoising, and causing image blurring. On the other hand, some denoising algorithms (such as wavelet edge denoising) have an excessively large operation amount, are complex to implement, and are not applicable to image sensor circuits such as a complementary metal oxide semiconductor (CMOS) and a charge-coupled device (CCD) that are designed with low costs in recent years.

**SUMMARY**

This application is intended to resolve at least one of technical problems in the prior art.

Therefore, this application provides an image denoising system and an image denoising method.

An image denoising system is provided, including: an image signal obtaining unit, where the image signal obtaining unit is configured to obtain and output an image signal; and a processing unit, where the processing unit is configured to: receive the image signal, perform preprocessing on the image signal to obtain image data, perform Sobel operator calculation on a current pixel in the image data to obtain a Sobel operator of the current pixel, correct the Sobel operator of the current pixel to obtain the corrected Sobel operator, and determine, according to the corrected Sobel operator, whether denoising processing needs to be performed on the current pixel, where the processing unit is further configured to: when determining that the denoising processing needs to be performed on the current pixel, calculate an average pixel value of pixels around the current pixel, and perform denoising processing on the current pixel by using the average pixel value and the corrected Sobel operator; or the processing unit is further configured to: when determining that the denoising processing does not need to be performed on the current pixel, determine whether the denoising processing needs to be performed on a next pixel in the image data.

An image denoising method is provided, including: obtaining and outputting an image signal; receiving the image signal, performing preprocessing on the image signal to obtain image data, performing Sobel operator calculation on a current pixel in the image data to obtain a Sobel operator of the current pixel, correcting the Sobel operator of the current pixel to obtain the corrected Sobel operator, and determining, according to the corrected Sobel operator, whether denoising processing needs to be performed on the current pixel; and if the denoising processing needs to be performed on the current pixel, calculating an average pixel value of pixels around the current pixel, and performing denoising processing on the current pixel by using the average pixel value and the corrected Sobel operator; or if the denoising processing does not need to be performed on the current pixel, determining whether the denoising processing needs to be performed on a next pixel in the image data.

A storage medium stores one or more modules, and when executed by an electronic device, the one or more modules enable the electronic device to perform the foregoing image denoising method.

An application program is configured to perform the foregoing image denoising method when the application program is run.

According to the foregoing technical solutions, a detailed area and a smooth area in an image can be relatively accurately distinguished by using a Sobel operator, and denoising processing is performed on the smooth area but not on the detailed area. Therefore, according to the foregoing technical solutions, when denoising processing is performed on an image, details in the image can be retained as much as possible, improving a signal-to-noise ratio level of the image. In addition, the technical solutions are easy to implement, and the area of an image sensor is barely increased.

Additional aspects and advantages of this application are partly provided in the following descriptions, partly become obvious in the following descriptions, or are appreciated by means of practice of this application.

## BRIEF DESCRIPTION OF THE DRAWINGS

The foregoing and/or additional aspects and advantages of this application become obvious and readily understood in the following descriptions of implementations with reference to the following accompanying drawings in which:

FIG. 1 is a schematic diagram of an image denoising system according to an implementation of this application;

FIG. 2 is a schematic diagram of a pixel matrix used by an image denoising system according to an implementation of this application;

FIG. 3 is a schematic diagram of a horizontal Sobel matrix used by an image denoising system according to an implementation of this application;

FIG. 4 is a schematic diagram of a vertical Sobel matrix used by an image denoising system according to an implementation of this application; and

FIG. 5 is a flowchart of an image denoising method according to an implementation of this application.

## DETAILED DESCRIPTION

The following describes implementations of this application in detail, and examples of the implementations are shown in the accompanying drawings throughout which identical or similar reference numerals indicate identical or similar elements, or elements that have identical or similar functions. The implementations below with reference to the accompanying drawings are exemplary and merely intended to set forth but not construed to limit this application.

In the descriptions of this application, it should be noted that, unless otherwise clearly stipulated and defined, terms "mounting", "mutually connect", and "connection" should be understood broadly. For example, a connection may be a fixed connection, a detachable connection, or an integral connection; or may be a mechanical connection or an electrical connection; or may be mutual communication; or may be a direct connection, an indirect connection implemented by using an intermediate medium; or may be internal connection between two elements or an interaction relationship between two elements. A person of ordinary skill in the art may understand specific meanings of the foregoing terms in this application in specific cases.

The following disclosure provides a plurality of different implementations or examples to implement different structures of this application. To simplify the disclosure of this application, the following describes components and settings in particular examples. Certainly, the examples are merely for illustration purposes, and are not intended to limit this application. In addition, in this application, reference numerals and/or reference letters may be repeated in different examples. This repetition is for the purpose of simplicity and clarity, and does not in itself indicate a relationship between the various implementations and/or settings that are discussed. In addition, this application provides examples of various particular processes and materials, but a person of ordinary skill in the art will recognize that other processes and/or materials may be applied and/or used.

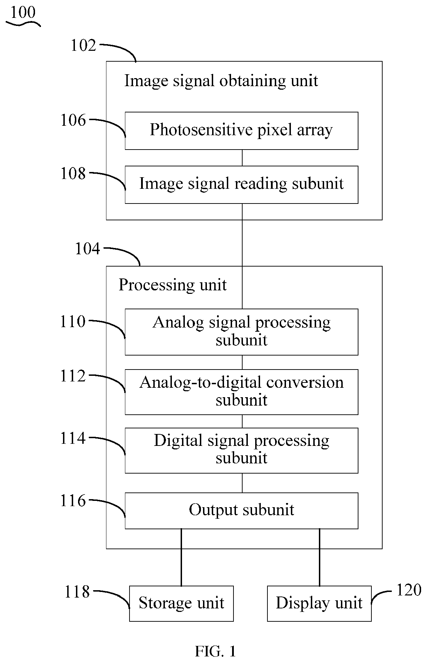

Referring to FIG. 1, an image denoising system 100 according to an implementation of this application includes an image signal obtaining unit 102 and a processing unit 104. The image denoising system 100 in this implementation is applicable to CMOS and CCD image sensor circuits.

The image signal obtaining unit 102 is configured to obtain and output an image signal. Specifically, in this implementation, the image signal obtaining unit 102 includes a photosensitive pixel array 106 and an image signal reading subunit 108.

The photosensitive pixel array 106 is configured to convert an optical signal into the image signal. For example, the photosensitive pixel array 106 may be a CMOS pixel array or a CCD pixel array. The photosensitive pixel array 106 includes a plurality of photosensitive pixels. The plurality of photosensitive pixels is arranged in two directions vertical to each other, to form the photosensitive pixel array 106.

The image signal reading subunit 108 is connected to the photosensitive pixel array 106. The image signal reading subunit 108 is configured to: control the photosensitive pixel array 106 to convert the optical signal into the image signal, and output the image signal. For example, the image signal reading subunit 108 is an integral image signal reading unit, and is configured to: control the photosensitive pixel array 106 of a current image frame to be reset and read line by line.

The processing unit 104 is configured to: receive the image signal, perform preprocessing on the image signal to obtain image data, perform Sobel operator calculation on a current pixel in the image data to obtain a Sobel operator of the current pixel, correct the Sobel operator of the current pixel to obtain the corrected Sobel operator, and determine, according to the corrected Sobel operator, whether denoising processing needs to be performed on the current pixel. When determining that the denoising processing needs to be performed on the current pixel, the processing unit 104 is configured to: calculate an average pixel value of pixels around the current pixel, and perform denoising processing on the current pixel by using the average pixel value and the corrected Sobel operator. When determining that the denoising processing does not need to be performed on the current pixel, the processing unit 104 is configured to determine whether the denoising processing needs to be performed on a next pixel in the image data.

Specifically, the image signal output by the image signal obtaining unit 102 is generally an analog image signal, and the processing unit 104 first needs to digitalize the analog image signal, to obtain the digitalized image data, and then processes the image data. Therefore, in this implementation, the processing unit 104 includes an analog signal processing subunit 110, an analog-to-digital conversion subunit 112, a digital signal processing subunit 114, and an output subunit 116.

The analog signal processing subunit 110 is configured to: receive the image signal output by the image signal reading subunit 108, and output the processed image signal. For example, the analog signal processing subunit 110 performs essential processing on an image signal serving as an analog signal, to obtain a characteristic parameter of the image signal. The essential processing is specifically modulation, filtering, amplification, or the like.

The analog-to-digital conversion subunit 112 is configured to convert the image signal output by the analog signal processing subunit 110 into the digitalized image data. The digitalized image data is generally image data on which the denoising processing has not been performed.

The digital signal processing subunit 114 is configured to: perform Sobel operator calculation on the current pixel in the image data to obtain the Sobel operator of the current pixel, correct the Sobel operator of the current pixel to obtain the corrected Sobel operator, and determine, according to the corrected Sobel operator, whether the denoising processing needs to be performed on the current pixel. When the denoising processing needs to be performed on the current pixel, the digital signal processing subunit 114 is configured to: calculate the average pixel value, and perform denoising processing on the current pixel by using the average pixel value and the corrected Sobel operator. When the denoising processing does not need to be performed on the current pixel, the digital signal processing subunit 114 is configured to determine whether the denoising processing needs to be performed on the next pixel in the image data.

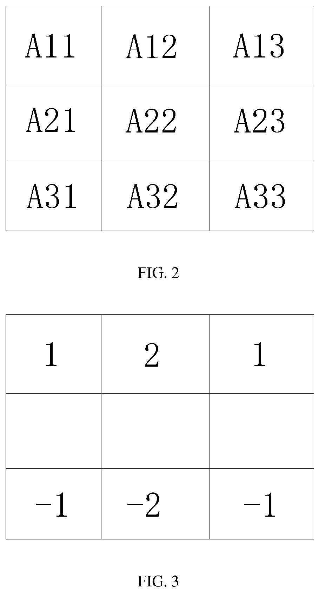

Specifically, the digital signal processing subunit 114 constructs an n*n pixel matrix by using the current pixel as the center, and performs Sobel operator calculation on the current pixel by using the n*n pixel matrix, where n is a positive odd number and n is greater than 1. In this implementation, n=3, that is, the n*n pixel matrix is a 3*3 pixel matrix. For ease of description, as shown in FIG. 2, pixels in the 3*3 pixel matrix are numbered, and the current pixel is set to a pixel A22 located in the middle of the pixel matrix.

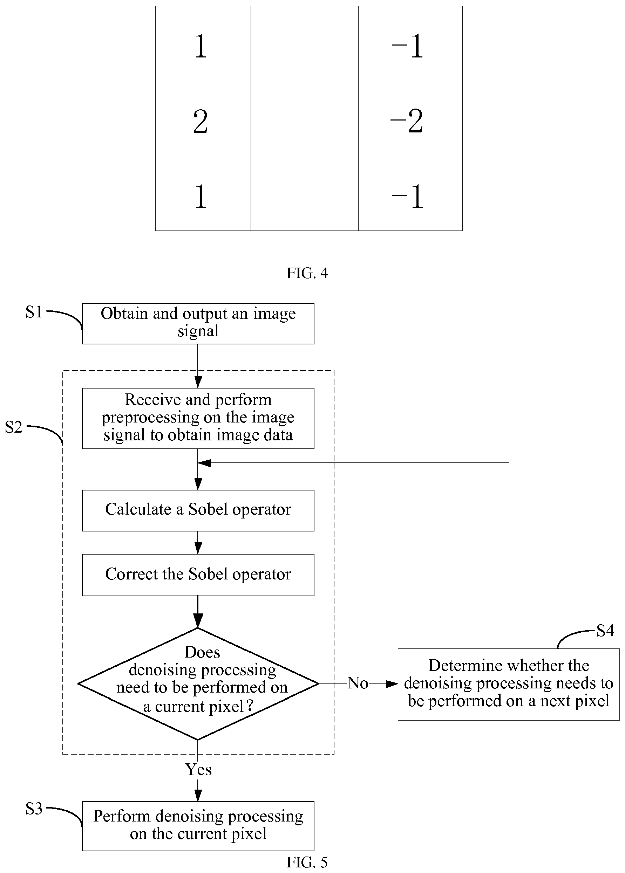

In addition, the digital signal processing subunit 114 performs Sobel operator calculation with reference to a horizontal Sobel matrix and a vertical Sobel matrix. FIG. 3 shows an example of the horizontal Sobel matrix, and FIG. 4 shows an example of the vertical Sobel matrix.

Therefore, a Sobel operator of the current pixel A22 is calculated according to the following formula, and a denoising intensity value of the current pixel is measured based on the Sobel operator:

$$C\_SOBEL=(A11+2*A12+A13)-(A31+2*A32+A33)+(A11+2*A21+A31)-$$
$$(A13+2*A23+A33)$$

where C_SOBEL is the Sobel operator of the current pixel A22, A11 indicates a pixel value of a pixel A11, A12 indicates a pixel value of a pixel A12, A13 indicates a pixel value of a pixel A13, A31 indicates a pixel value of a pixel A31, A32 indicates a pixel value of a pixel A32, A33 indicates a pixel value of a pixel A33, A21 indicates a pixel value of a pixel A21, and A23 indicates a pixel value of a pixel A23.

After obtaining the Sobel operator of the current pixel A22, the digital signal processing subunit 114 corrects the Sobel operator. Specifically, the digital signal processing subunit 114 is configured to obtain the corrected Sobel operator according to the following formula:

$$C\_SOBEL\_T = \begin{cases} TH & (C\_SOBEL>TH) \\ \\ C\_SOBEL & (C\_SOBEL<=TH) \end{cases}$$

where TH is a specified value, and may be determined according to an empirical value, for example, TH=96, C_SOBEL_T is the corrected Sobel operator, and C_SOBEL is the uncorrected Sobel operator.

For the current pixel A22 whose C_SOBEL_T=TH, the digital signal processing subunit 114 determines that the current pixel A22 is an edge pixel, and the denoising processing does not need to be performed on the current pixel A22.

For the current pixel A22 whose C_SOBEL_T=C_SOBEL, the digital signal processing subunit 114 determines that the denoising processing needs to be performed on the current pixel A22.

A specific method for performing denoising processing is: the digital signal processing subunit 114 is configured to calculate an average pixel value of pixels around the current pixel A22. In this implementation, there are eight pixels around the current pixel A22, and the eight pixels are the pixels A11, A12, A13, A21, A23, A31, A32, and A33. Therefore, the average pixel value AVER is obtained according to the following formula:

$$AVER=(A11+A12+A13+A21+A23+A31+A32+A33)/8.$$

The digital signal processing subunit 114 performs denoising processing on the current pixel A22 by using the average pixel value and the corrected Sobel operator according to the following formula:

$$AVER\_SOBEL=(C\_SOBEL\_T*A)/TH+(TH–C\_SOBEL\_T)*AVER/TH$$

where AVER_SOBEL indicates a pixel value of the current pixel A22 after the denoising, A indicates a pixel value of the current pixel A22 before the denoising, for example, A=A22, and AVER indicates the average pixel value.

After the pixel value of the current pixel A22 after the denoising is obtained, the digital signal processing subunit 114 replaces the current pixel A22 with the pixel value of the current pixel A22 after the denoising.

If the denoising processing does not need to be performed on the current pixel A22, the digital signal processing subunit 114 determines whether the denoising processing needs to be performed on a next pixel in the image data, so as to process all pixels in the image data. For example, the 3*3 pixel matrix is slid backwards or downwards and the digital signal processing subunit 114 performs line scanning and processing for the pixels in the image data one by one from left to right.

The output subunit 116 is configured to output the image data on which the denoising processing has been performed. For example, the output subunit 116 may output the image data on which the denoising processing has been performed to a storage unit 118 and/or a display unit 120 for the purpose of storage and/or display.

It should be noted that, the pixel value of the pixel is a grayscale value of the pixel during brightness denoising, or is an average value of an R channel (a red channel), a G channel (a green channel), and a B channel (a blue channel) of the pixel during color denoising.

In summary, the image denoising system 100 can relatively accurately distinguish a detailed area (such as an edge) and a smooth area (a pixel whose Sobel operator is relatively small) in an image by using a Sobel operator, and denoising processing is performed on the smooth area but not on the detailed area. Therefore, when performing denoising processing on an image, the image denoising system 100 can retain details in the image as much as possible, improving a signal-to-noise ratio level of the image. In addition, the image denoising system is easy to implement, and the area of an image sensor is barely increased.

Referring to FIG. 5, an implementation of this application provides an image denoising method. The image denoising method may be implemented by the image denoising system 100 in the foregoing implementation. The image denoising method includes the following steps.

S1: Obtain and output an image signal. For example, the image signal is obtained and output by using an image signal obtaining unit.

S2: Receive the image signal, perform preprocessing on the image signal to obtain image data, perform Sobel operator calculation on a current pixel in the image data to obtain a Sobel operator of the current pixel, correct the Sobel operator of the current pixel to obtain the corrected Sobel operator, and determine, according to the corrected Sobel operator, whether denoising processing needs to be performed on the current pixel. For example, S2 may be implemented by a processing unit.

S3: If the denoising processing needs to be performed on the current pixel, calculate an average pixel value of pixels around the current pixel, and perform denoising processing on the current pixel by using the average pixel value and the corrected Sobel operator.

S4: If the denoising processing does not need to be performed on the current pixel, determine whether the denoising processing needs to be performed on a next pixel in the image data. For example, S3 and S4 may be implemented by using a processing unit.

In S1, specifically, in this implementation, the image signal obtaining unit includes a photosensitive pixel array and an image signal reading subunit.

The photosensitive pixel array is configured to convert an optical signal into the image signal. For example, the photosensitive pixel array may be a CMOS pixel array or a CCD pixel array. The photosensitive pixel array includes a plurality of photosensitive pixels. The plurality of photosensitive pixels is arranged in two directions vertical to each other, to form the photosensitive pixel array.

The image signal reading subunit is connected to the photosensitive pixel array. The image signal reading subunit is configured to: control the photosensitive pixel array to convert the optical signal into the image signal, and output the image signal. For example, the image signal reading subunit is an integral image signal reading unit, and is configured to control: the photosensitive pixel array of a current image frame to be reset and read line by line.

In S2, the image signal output by the image signal obtaining unit is generally an analog image signal, and the processing unit first needs to digitalize the analog image signal, to obtain the digitalized image data, and then processes the image data. Therefore, in this implementation, the processing unit includes an analog signal processing subunit, an analog-to-digital conversion subunit, a digital signal processing subunit, and an output subunit.

The performing preprocessing includes: receiving, by the analog signal processing subunit, the image signal output by the image signal reading subunit, and outputting the processed image signal. The analog-to-digital conversion subunit converts the image signal output by the analog signal processing subunit into the digitalized image data. For example, the analog signal processing subunit performs essential processing on an image signal serving as an analog signal, to obtain a characteristic parameter of the image signal. The essential processing is specifically modulation, filtering, amplification, or the like. The digitalized image data is generally image data on which the denoising processing has not been performed.

The digital signal processing subunit performs Sobel operator calculation on the current pixel in the image data to obtain the Sobel operator of the current pixel, corrects the Sobel operator of the current pixel to obtain the corrected Sobel operator, and determines, according to the corrected Sobel operator, whether the denoising processing needs to be performed on the current pixel.

Specifically, the digital signal processing subunit constructs an n*n pixel matrix by using the current pixel as the center, and performs Sobel operator calculation on the current pixel by using the n*n pixel matrix, where n is a positive odd number and n is greater than 1. In this implementation, n=3, that is, the n*n pixel matrix is a 3*3 pixel matrix. For ease of description, as shown in FIG. 2, pixels in the 3*3 pixel matrix are numbered, and the current pixel is set to a pixel A22 located in the middle of the pixel matrix.

In addition, the digital signal processing subunit performs Sobel operator calculation with reference to a horizontal Sobel matrix and a vertical Sobel matrix. FIG. 3 shows an example of the horizontal Sobel matrix, and FIG. 4 shows an example of the vertical Sobel matrix.

Therefore, a Sobel operator of the current pixel A22 is calculated according to the following formula, and a denoising intensity value of the current pixel is measured based on the Sobel operator:

$$C\_SOBEL = (A11 + 2*A12 + A13) - (A31 + 2*A32 + A33) + (A11 + 2*A21 + A31) -$$

$$(A13 + 2*A23 + A33)$$

where C_SOBEL is the Sobel operator of the current pixel A22, A11 indicates a pixel value of a pixel A11, A12 indicates a pixel value of a pixel A12, A13 indicates a pixel value of a pixel A13, A31 indicates a pixel value of a pixel A31, A32 indicates a pixel value of a pixel A32, A33 indicates a pixel value of a pixel A33, A21 indicates a pixel value of a pixel A21, and A23 indicates a pixel value of a pixel A23.

After obtaining the Sobel operator of the current pixel A22, the digital signal processing subunit corrects the Sobel operator. Specifically, the digital signal processing subunit is configured to obtain the corrected Sobel operator according to the following formula:

$$C\_SOBEL\_T = \begin{cases} TH & (C\_SOBEL>TH) \\ C\_SOBEL & (C\_SOBEL<=TH) \end{cases}$$

where TH is a specified value, and may be determined according to an empirical value, for example, TH=96, C_SOBEL_T is the corrected Sobel operator, and C_SOBEL is the uncorrected Sobel operator.

For the current pixel A22 whose C_SOBEL_T=TH, the digital signal processing subunit determines that the current pixel A22 is an edge pixel, and the denoising processing does not need to be performed on the current pixel A22; and then S4 is performed.

For the current pixel A22 whose C_SOBEL_T=C_SOBEL, the digital signal processing subunit determines that the denoising processing needs to be performed on the current pixel A22, and then S3 is performed.

In S3, a specific method for performing denoising processing is: the digital signal processing subunit is configured to calculate an average pixel value of pixels around the current pixel A22. In this implementation, there are eight pixels around the current pixel A22, and the eight pixels are the pixels A11, A12, A13, A21, A23, A31, A32, and A33. Therefore, the average pixel value AVER is obtained according to the following formula:

$$AVER=(A11+A12+A13+A21+A23+A31+A32+A33)/8.$$

The digital signal processing subunit performs denoising processing on the current pixel A22 by using the average pixel value and the corrected Sobel operator according to the following formula:

$$AVER\_SOBEL=(C\_SOBEL\_T*A)/TH+(TH–C\_SOBEL\_T)*AVER/TH$$

where AVER_SOBEL indicates a pixel value of the current pixel A22 after the denoising, A indicates a pixel value of the current pixel A22 before the denoising, for example, A=A22, and AVER indicates the average pixel value.

After the pixel value of the current pixel A22 after the denoising is obtained, the digital signal processing subunit replaces the current pixel A22 with the pixel value of the current pixel A22 after the denoising.

The output subunit outputs the image data on which the denoising processing has been performed. For example, the output subunit may output the image data on which the denoising processing has been performed to a storage unit and/or a display unit for the purpose of storage and/or display.

In S4, that is, when the denoising processing does not need to be performed on the current pixel A22, the digital signal processing subunit determines whether the denoising processing needs to be performed on a next pixel in the image data, so as to process all pixels in the image data. For example, the 3*3 pixel matrix is slid backwards or downwards and the digital signal processing subunit performs line scanning and processing for the pixels in the image data one by one from left to right.

In summary, according to the foregoing image denoising method, a detailed area (such as an edge) and a smooth area (a pixel whose Sobel operator is relatively small) in an image can be relatively accurately distinguished by using a Sobel operator, and denoising processing is performed on the smooth area but not on the detailed area. Therefore, according to the foregoing image denoising method, when denoising processing is performed on an image, details in the image can be retained as much as possible, improving a signal-to-noise ratio level of the image. In addition, the image denoising method is easy to implement, and the area of an image sensor is barely increased.

An embodiment of this application further provides a storage medium. The storage medium stores one or more modules, and when executed by an electronic device, the one or more modules enable the electronic device to perform the image denoising method according to any one of the foregoing embodiments.

An embodiment of this application further provides an application program, configured to perform the image denoising method according to any one of the foregoing embodiments when the application program is run.

In the descriptions of this specification, descriptions of reference terms "one implementation", "some implementations", "an exemplary implementation", "an example", "a specific example", or "some examples" are intended to indicate that specific features, structures, materials, or characteristics described with reference to the implementation or example are included in at least one implementation or example of this application. In this specification, exemplary descriptions of the foregoing terms do not necessarily refer to same implementations or examples. In addition, the specific features, the structures, the materials or the characteristics that are described may be combined in a proper manner in any one or more implementations or examples.

In addition, terms "first" and "second" are merely intended for a purpose of description, and shall not be understood as an indication or implication of relative importance or an implicit indication of a quantity of indicated technical features. Therefore, a feature modified by "first" or "second" may explicitly or implicitly include at least one of the features. In the descriptions of this application, unless otherwise explicitly specified, the meaning of "plurality" is at least two, for example, two or three.

Descriptions of any process or method described in the flowchart or herein in other manners may be understood as modules, sections, or parts of code that includes one or more executable instructions that are configured to implement steps of specific logical functions or processes, and that the scope of a preferred implementation of this application includes other implementations. Instead of a shown or discussed sequence, the related functions may be executed basically at the same time or in an order reverse to the shown or discussed sequence. This should be understood by a person skilled in the art to which the embodiments of this application belong.

Logic and/or steps described in the flowchart or herein may be, for example, considered as a sequencing table used for implementing executable instructions of logical functions, and may be specifically implemented in any computer readable medium, to be used by an instruction execution system, apparatus, or device (for example, a computer-based system, a system including a processor, or another system that can obtain instructions from an instruction execution system, apparatus, or device), or used by combining the instruction execution system, apparatus, or device. In this specification, the "computer readable medium" may be any apparatuses that can contain, store, communicate, propagate, or transmit a program for instructions to execute a system or an apparatus or a device or execute the system or apparatus or device with reference to these instructions. More specific examples of the computer readable medium (non-exhaustive lists) include the following: an electrical connection portion having one or more cablings (electronic apparatus), a portable computer enclosure (magnetic apparatus), a random access memory (RAM), a read-only memory (ROM), an erasable programmable read-only memory (EPROM or a flash memory), a fiber apparatus, and a portable compact disc read-only memory (CDROM). In addition, the computer readable medium even may be a piece of paper that can be printed with the program or other proper media, because the piece of paper or the other media, for example, may be optically scanned, next the program is obtained in an in an electronic manner by processing with editing, interpretation, or other proper manners if necessary, and then the program is stored in a computer memory.

It should be understood that, various parts of this application can be implemented by using hardware, software, firmware, or combinations of them. In the foregoing implementations, a plurality of steps or methods can be implemented by using software or firmware that is stored in a memory and that is executed by a proper instruction execution system. For example, if the plurality of steps or methods is implemented by software, which is the same as that in another implementation, any one or a combination of the following technologies that are known in the art may be used to implement: a discrete logic circuit having a logic gate circuit configured to implement a logic function for a data signal, an application-specific integrated circuit having a proper combined logic gate circuit, a programmable gate array (PGA), a field programmable gate array (FPGA), or the like.

It may be understand by a person of ordinary skill in the art that all or some of the steps of the method in the foregoing embodiments may be implemented by using a program instructing relevant hardware. The program may be stored in a computer readable storage medium. When the program is executed, one or a combination of the following steps is included.

In addition, functional units in the embodiments of this application may be integrated into one processing module, or each of the units may exist alone physically, or two or more units are integrated into one module. The integrated modules may be implemented in the form of hardware or software functional modules. If implemented in the form of software functional modules and sold or used as an independent product, the integrated modules may also be stored in a computer readable storage medium.

The storage medium mentioned above may be a read-only memory, a magnetic disk or an optical disc. Although the embodiments of this application are shown and described above, it may be understood that the foregoing embodiments are exemplary, and cannot be understood as limitations to this application. A person of ordinary skill in the art may make changes, modifications, replacements, and variations to the foregoing embodiments.

## Claims

1. An image denoising system, comprising:

   an image signal obtaining unit, configured to obtain and output an image signal; and
   a processing unit, configured to: receive the image signal, perform preprocessing on the image signal to obtain image data, perform Sobel operator calculation on a current pixel in the image data to obtain a Sobel operator of the current pixel, correct the Sobel operator of the current pixel to obtain the corrected Sobel operator, and determine whether denoising processing needs to be performed on the current pixel according to the corrected Sobel operator, wherein

the processing unit is further configured to: calculate an average pixel value of pixels around the current pixel when determining that the denoising processing needs to be performed on the current pixel, and perform denoising processing on the current pixel by using the average pixel value and the corrected Sobel operator; or the processing unit is further configured to determine whether the denoising processing needs to be performed on a next pixel in the image data when determining that the denoising processing does not need to be performed on the current pixel.

2. The image denoising system according to claim 1, wherein the processing unit is further configured to: construct an n*n pixel matrix by using the current pixel as the center, and perform Sobel operator calculation on the current pixel by using the n*n pixel matrix, wherein n is a positive odd number and n is greater than 1.

3. The image denoising system according to claim 1 or 2, wherein the processing unit is further configured to obtain the corrected Sobel operator according to the following formula:

$$C\_SOBEL\_T = \begin{cases} TH & (C\_SOBEL>TH) \\ C\_SOBEL & (C\_SOBEL<=TH) \end{cases}$$

wherein TH is a specified value, C_SOBEL_T is the corrected Sobel operator, and C_SOBEL is the uncorrected Sobel operator.

4. The image denoising system according to claim 3, wherein the processing unit is further configured to:

when the corrected Sobel operator is equal to the specified value, determine that the denoising processing does not need to be performed on the current pixel; or
when the corrected Sobel operator is equal to the uncorrected Sobel operator, determine that the denoising processing needs to be performed on the current pixel.

5. The image denoising system according to any one of claims 1 to 4, wherein the processing unit is configured to perform denoising processing on the current pixel according to the following formula:

$$AVER\_SOBEL=(C\_SOBEL\_T*A)/TH+(TH–C\_SOBEL\_T)*AVER/TH$$

wherein AVER_SOBEL indicates a pixel value of the current pixel after the denoising, A indicates a pixel value of the current pixel before the denoising, C_SOBEL_T is the corrected Sobel operator, TH is the specified value, and AVER indicates the average pixel value.

6. The image denoising system according to any one of claims 1 to 5, wherein the image signal obtaining unit comprises:

a photosensitive pixel array, wherein the photosensitive pixel array is configured to convert an optical signal into the image signal; and
an image signal reading subunit, wherein the image signal reading unit is configured to: control the photosensitive pixel array to convert the optical signal into the image signal, and output the image signal.

7. The image denoising system according to claim 6, wherein the processing unit comprises:

an analog signal processing subunit, wherein the analog signal processing subunit is configured to: receive the image signal output by the image signal reading unit, and output the processed image signal;
an analog-to-digital conversion subunit, wherein the analog-to-digital conversion subunit is configured to convert the image signal output by the analog signal processing subunit into the digitalized image data;
a digital signal processing subunit, wherein the digital signal processing subunit is configured to: perform Sobel operator calculation on the current pixel in the image data to obtain the Sobel operator of the current pixel, correct the Sobel operator of the current pixel to obtain the corrected Sobel operator, and determine, according to the corrected Sobel operator, whether the denoising processing needs to be performed on the current pixel, wherein

the digital signal processing subunit is further configured to: when the denoising processing needs to be performed on the current pixel, calculate the average pixel value, and perform denoising processing on the current pixel by using the average pixel value and the corrected Sobel operator; or

the digital signal processing subunit is further configured to: when the denoising processing does not need to be performed on the current pixel, determine whether the denoising processing needs to be performed on the next pixel in the image data; and

an output subunit, wherein the output subunit is configured to output the image data on which the denoising processing has been performed.

8. An image denoising method, comprising:

obtaining and outputting an image signal;

receiving the image signal, performing preprocessing on the image signal to obtain image data, performing Sobel operator calculation on a current pixel in the image data to obtain a Sobel operator of the current pixel, correcting the Sobel operator of the current pixel to obtain the corrected Sobel operator, and determining, according to the corrected Sobel operator, whether denoising processing needs to be performed on the current pixel; and

if the denoising processing needs to be performed on the current pixel, calculating an average pixel value of pixels around the current pixel, and performing denoising processing on the current pixel by using the average pixel value and the corrected Sobel operator; or

if the denoising processing does not need to be performed on the current pixel, determining whether the denoising processing needs to be performed on a next pixel in the image data.

9. The image denoising method according to claim 8, wherein the performing Sobel operator calculation on a current pixel in the image data to obtain a Sobel operator of the current pixel comprises:

constructing an n*n pixel matrix by using the current pixel as the center, and performing Sobel operator calculation on the current pixel by using the n*n pixel matrix, wherein n is a positive odd number and n is greater than 1.

10. The image denoising method according to claim 8 or 9, wherein the correcting the Sobel operator of the current pixel to obtain the corrected Sobel operator comprises:
obtaining the corrected Sobel operator according to the following formula:

$$C\_SOBEL\_T = \begin{cases} TH & (C\_SOBEL>TH) \\ \\ C\_SOBEL & (C\_SOBEL<=TH) \end{cases}$$

wherein TH is a specified value, C_SOBEL_T is the corrected Sobel operator, and C_SOBEL is the uncorrected Sobel operator.

11. The image denoising method according to claim 10, wherein the determining, according to the corrected Sobel operator, whether denoising processing needs to be performed on the current pixel comprises:

if the corrected Sobel operator is equal to the specified value, determining, by the processing unit, that the denoising processing does not need to be performed on the current pixel; or
if the corrected Sobel operator is equal to the uncorrected Sobel operator, determining, by the processing unit, that the denoising processing needs to be performed on the current pixel.

12. The image denoising method according to any one of claims 8 to 11, wherein the performing denoising processing on the current pixel by using the average pixel value and the corrected Sobel operator comprises:
performing denoising processing on the current pixel according to the following formula:

$$AVER\_SOBEL=(C\_SOBEL\_T*A)/TH+(TH–C\_SOBEL\_T)*AVER/TH$$

wherein AVER_SOBEL indicates a pixel value of the current pixel after the denoising, A indicates a pixel value of the current pixel before the denoising, C_SOBEL_T is the corrected Sobel operator, TH is the specified value, and AVER indicates the average pixel value.

13. A storage medium, wherein the storage medium stores one or more modules, and when executed by an electronic device, the one or more modules enable the electronic device to perform:
   the image denoising method according to any one of claims 8 to 12.

14. An application program, configured to perform the image denoising method according to any one of claims 8 to 12 when the application program is run.

100

102

Image signal obtaining unit

106

Photosensitive pixel array

108

Image signal reading subunit

104

Processing unit

110

Analog signal processing
subunit

112

Analog-to-digital conversion
subunit

114

Digital signal processing
subunit

116

Output subunit

118

Storage unit

Display unit

120

FIG. 1

| A11 | A12 | A13 |
|-----|-----|-----|
| A21 | A22 | A23 |
| A31 | A32 | A33 |

FIG. 2

| 1  | 2  | 1  |
|----|----|----|
|    |    |    |
| −1 | −2 | −1 |

FIG. 3

| 1 | | −1 |
|---|---|---|
| 2 | | −2 |
| 1 | | −1 |

FIG. 4

S1 — Obtain and output an image signal

S2 — Receive and perform preprocessing on the image signal to obtain image data

Calculate a Sobel operator

Correct the Sobel operator

Does denoising processing need to be performed on a current pixel?

No → Determine whether the denoising processing needs to be performed on a next pixel — S4

Yes

S3 — Perform denoising processing on the current pixel

FIG. 5

# INTERNATIONAL SEARCH REPORT

| | International application No. |
|---|---|
| | PCT/CN2016/094817 |

**A. CLASSIFICATION OF SUBJECT MATTER**

G06T 5/00 (2006.01) i

According to International Patent Classification (IPC) or to both national classification and IPC

**B. FIELDS SEARCHED**

Minimum documentation searched (classification system followed by classification symbols)

G06T; G06K

Documentation searched other than minimum documentation to the extent that such documents are included in the fields searched

Electronic data base consulted during the international search (name of data base and, where practicable, search terms used)

CNKI, CNPAT, WPI, EPODOC: noise, filter, denois+, pixel, judg+, edge, sobel, correct+, image, compar+, update

**C. DOCUMENTS CONSIDERED TO BE RELEVANT**

| Category* | Citation of document, with indication, where appropriate, of the relevant passages | Relevant to claim No. |
|---|---|---|
| A | CN 104794685 A (TENCENT TECHNOLOGY (SHENZHEN) CO., LTD.) 22 July 2015 (22.07.2015) the whole document | 1-14 |
| A | CN 1633159 A (BEIJING VIMICRO CORPORATION) 29 June 2005 (29.06.2005) the whole document | 1-14 |
| A | CN 104778669 A (BEIJING POSTS & TELECOMMUNICATION UNIV) 15 July 2015 (15.07.2015) the whole document | 1-14 |
| A | JP 2008210387 A (FUJITSU LTD.) 11 September 2008 (11.09.2008) the whole document | 1-14 |
| A | CN 104657735 A (BYD CO., LTD.) 27 May 2015 (27.05.2015) the whole document | 1-14 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 October 2016 | 27 October 2016 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>MENG, Jia<br><br>Telephone No. (86-10) 53318963 |

Form PCT/ISA /210 (second sheet) (July 2009)

**INTERNATIONAL SEARCH REPORT**

| International application No. |
| --- |
| PCT/CN2016/094817 |

C (Continuation).      DOCUMENTS CONSIDERED TO BE RELEVANT

| Category* | Citation of document, with indication, where appropriate, of the relevant passages | Relevant to claim No. |
| --- | --- | --- |
| A | CN 103020911 A (LUOYANG ELECTRO-OPTICAL EQUIPMENT RESEARCH INSTITUTE, AVIATION INDUSTRY CORPORATION OF CHINA) 03 April 2013 (03.04.2013) the whole document | 1-14 |
| A | US 2006018564 A1 (KABUSHIKI KAISHA TOSHIBA) 26 January 2006 (26.01.2006) the whole document | 1-14 |

Form PCT/ISA /210 (continuation of second sheet) (July 2009)

**INTERNATIONAL SEARCH REPORT**
Information on patent family members

International application No.

PCT/CN2016/094817

| Patent Documents referred in the Report | Publication Date | Patent Family | Publication Date |
|---|---|---|---|
| CN 104794685 A | 22 July 2015 | WO 2015106700 A1 | 23 July 2015 |
| CN 1633159 A | 29 June 2005 | None | |
| CN 104778669 A | 15 July 2015 | None | |
| JP 2008210387 A | 11 September 2008 | CN 101256630 A | 03 September 2008 |
| CN 104657735 A | 27 May 2015 | None | |
| CN 103020911 A | 03 April 2013 | None | |
| US 2006018564 A1 | 26 January 2006 | JP 2006033647 A | 02 February 2006 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510505819